Europäisches Patentamt

European Patent Office

Office européen des brevets

(11) Veröffentlichungsnummer: **0 203 910 B1**

# (12) EUROPÄISCHE PATENTSCHRIFT

(45) Veröffentlichungstag der Patentschrift: **17.04.91**

(51) Int. Cl.⁵: **G01M 15/00**

(21) Anmeldenummer: **86890146.3**

(22) Anmeldetag: **20.05.86**

(54) **Messverfahren für eine druckumlaufgeschmierte Brennkraftmaschine und Vorrichtung zur Durchführung des Verfahrens.**

(30) Priorität: **21.05.85 AT 1535/85**

(43) Veröffentlichungstag der Anmeldung:
**03.12.86 Patentblatt 86/49**

(45) Bekanntmachung des Hinweises auf die
Patenterteilung:
**17.04.91 Patentblatt 91/16**

(84) Benannte Vertragsstaaten:
**AT DE GB IT**

(56) Entgegenhaltungen:
**EP-A- 0 029 736**
**US-A- 4 064 746**
**US-A- 4 424 709**

(73) Patentinhaber: **AVL Gesellschaft für Verbren-**
**nungskraftmaschinen und Messtechnik**
**mbH.Prof.Dr.Dr.h.c. Hans List**
**Kleiststrasse 48**
**A-8020 Graz(AT)**

(72) Erfinder: **Schiffbänker, Herbert, Dipl.-Ing.**
**Dr. Robert Graf Strasse 64/10**
**A-8010 Graz(AT)**
Erfinder: **List, Helmut, Dipl.-Ing.**
**Bogengasse 36**
**A-8010 Graz(AT)**

(74) Vertreter: **Krause, Walter, Dr. Dipl.-Ing. et al**
**Postfach 200 Singerstrasse 8**
**A-1010 Wien(AT)**

## Beschreibung

Die Erfindung bezieht sich auf ein Meßverfahren zur Gewinnung von Daten über Lagerschäden einer selbst- oder fremdgetriebenen druckumlaufgeschmierten Brennkraftmaschine.

Meßverfahren zur Gewinnung von Daten, die Aussagen über Betriebsparameter und Betriebsgrößen von laufenden Brennkraftmaschinen erlauben oder über den Zustand von Gleitlagern etc. Auskunft geben, wobei z.B. Öldruckmessungen oder akustische Methoden angewandt werden, sind meist zeit- und personalaufwendig und lassen teilweise nur eine grobe Prüfung der Brennkraftmaschine zu.

Die genannten Öldruckschwingungen werden beispielsweise durch Pulse in den mit dynamischen Wechselkräften beaufschlagten Gleitlagern hervorgerufen und pflanzen sich mit Schallgeschwindigkeit in der Drucköisäule fort. Aus Veränderungen in deren Regelmäßigkeit in bezug auf einen Arbeitstakt (Motorzyklus) lassen sich Aussagen über die relativen Kompressions- und Zündungsverhältnisse, über den mechanischen Ablauf oszillierender Massen generell sowie auch über den Zustand der mit Drucköl versorgten Gleitlager ableiten.

So ist aus der US-A- 4 424 709 ein Signalanalysator zum Auffinden von Maschinenfehlern bekannt, welcher eine Reihe von Sensoren zur Erfassung der Betriebsparameter der Maschine, wie der Maschinendrehzahl, des Unterdruckes im Finlaßkrümmer und unter anderem auch des Öldruckes aufweist. Elektrische Signale, welche in ihren Amplitudenwerten und in ihrer Frequenz den Retriebsparametern der Maschine entsprechen, werden zur Erzeugung eines Frequenzbereichs-Spektrums verwendet, das für die getestete Maschine charakteristisch ist. In einer Vergleichseinrichtung wird dieses Spektrum mit dem einer defektfreien Maschine verglichen, wobei Unterschiede der Spektren in bestimmten Frequenzbereichen auf Maschinenfehler hindeuten. Mit dem genannten Signalanalysator lassen sich bei einem Maschinentest, beispielsweise nach der Endmontage, vor allem große Fehler, wie z.B. kurzgeschlossene Zündkabel, zu mageres Luft-Brennstoff-Gemisch, Leckagen des Unterdruckes im Einlaßkrümmer, zusammengebrochene Ventilstößel für die Ein- und Auslaßventile, ungenaue Steuerung der Nockenwelle, sowie fehlende Lagerschalen und fehlende Kolbenringe feststellen. Nachteilig dabei ist es, daß sich der genannte Signalanalysator nicht dazu eignet, kleine Lagerschaden, beispielsweise geringfügige Spielerweiterungen frühzeitig zu erkennen und eindeutig anzuzeigen.

Der Erfindung liegt die Aufgabe zugrude ein Meßverfahren vorzuschlagen, mit welchem bei einer selbst- oder fremdgetriebenen Brennkraftmaschine bereits bei kleinen Lagerschäden der Ort des Schadens sowie der Lagertyp, wie beispielsweise Hauptlager oder Pleuellager, zweifelsfrei festgestellt werden kann.

Diese Aufgabe wird erfindungsgemäß durch die Kombination folgender Merkmale gelöst, wobei

a) im druckseitigen Ölkreislauf Druckschwingungen aufgenommen und in ein elektrisches Signal (I) umgewandelt werden, welches Signal als Funktion des Drehwinkels dargestellt wird,

b) das elektrische Signal (I) , ggf. nach dessen Verstärkung, einem Filter (30), insbesondere einem Tiefpaßfilter zugeführt wird,

c) das gefilterte Signal (III) in einem A/D-Wandler (32) auf der Basis des Signals (IV) eines Winkelmarkengebers (31) digitalisiert und die gewonnenen digitalen Daten in einer Speichereinheit (34) abgelegt werden,

d) die in der Zeitebene vorliegenden Daten in einer Transformationseinheit (35) in die Frequenzebene transformiert werden, wonach die transformierten Daten einer Pegelauswertung (36) zugeführt und mit vorgegebenen Referenzpegeln verglichen werden, wobei im Defektfale der Lagertyp und ggf. die Größe des Schadens angegeben wird, sowie

e) für die in der Zeitebene vorliegenden Daten der Speichereinheit (34) die Lage der Extremwerte bestimmt wird, wonach im Defektfall aus der Lage der Extremwerte die Nummer des zugeordneten Zylinders angegeben wird.

Beim erfindungsgemäßen digitalen Meßverfahren liegt nun der das Meßsignal repräsentierende Werteblock in der Zeitebene in einer Speichereinheit vor, wobei die Digitalisierung des analogen Signals auf der Basis des Signals eines Winkelmarkengebers durchgeführt wird, sodaß der zeitliche Bezug der digitalen Meßdaten zu motorspezifischen Parametern erhalten bleibt. Die gespeicherten Daten werden nun rein softwaremäßig transformiert, beispielsweise fouriertransformiert, wonach die Daten in der Frequenzebene vorliegen und eine Pegelauswertung durchgeführt werden kann. Dabei werden die Pegel in bekannten, bestimmten Maschinenfehlern zuordenbaren Frequenzbereichen mit den Pegeln defektfreier Maschinen verglichen und der Lagertyp sowie ggf. die Größe des Schadens angegeben. Gleichzeitig werden auch die Extremwerte des in der Zeitebene vorliegenden Datenblocks bestimmt, wobei aus deren Lage auf die Nummer des schadhaften Zylinders bzw. dessen zugehörigen Haupt- oder Pleuellagers geschlossen wird.

Es ist natürlich auch möglich, nur jene Teile der in der Zeitebene vorliegenden Daten in die Frequenzebene zu transformieren, die für den zu bestimmenden Fehler von Bedeutung sind, sodaß die defektcharakteristischen Bereiche des Frequenzspektrums deutlicher in Erscheinung treten.

Bei der Untersuchung von Lagerschäden der Brennkraftmaschine werden die Veränderungen der zu ganz- bzw. halbzahligen Vielfachen der Motordrehzahl proportionalen Anteile der in der Frequenzebene vorliegenden Daten bezüglich eines Sollwertes erfaßt und mit Hilfe der aus der Zeitsignalauswertung gewonnenen Werte zur Bestimmung der Lage und der Größe des Lagerschadens sowie des Lagertyps herangezogen. Dabei tritt bei Hauptlagerdefekten bei Vierzylinder-Viertaktmotoren eine Überlagerung der Schwingung mit einer Schwingung der halben Motorordnung auf, bei der das Maximum den Schadensort anzeigt.

Bei defekten Pleuellagern wird eine markante dynamische Druckabsenkung im Schwingungsminimum des Schadzylinders zur Anzeige des Schadensortes und der Schadensgröße herangezogen. Diese wird durch den Anteil der eineinhalbten Ordnung in Relation zur zweiten Ordnung im Öldrucksignal des Vierzylinders angegeben, und zwar kann der Schaden sehr frühzeitig durch Zurücktreten der normalerweise dominanten Pulse zweiter Motorordnung (doppelte Drehfrequenz) gegenüber den sich stark erhebenden Signalteilen halber Ordnung aufgezeigt werden.

Gemäß einer weiteren Ausführung des erfindungsgemäßen Meßverfahrens ist vorgesehen, daß die im A/D-Wandler digitalisierten Daten vor ihrer Abspeicherung einer Einheit zur drehzahlsynchronen Signalmittelung zugeführt werden, welcher Einheit ein Signal mit der Drehzahlinformation der Brennkraftmaschine zugeleitet wird. Durch die Signalmittelung werden statistische Schwankungen im Zeitsignal verringert, wodurch eine noch genauere Defektanalyse möglich ist.

Eine vorteilhafte Weiterbildung des Meßverfahrens nach der Erfindung ist dadurch gegeben, daß vorzugsweise zur Bestimmung eines Pleuellagerschadens, bei den in der Zeitebene vorliegenden Daten die Phasenverschiebung Δ t der Druckmaxima bzw. -minima im bezug auf das Zeitsignal einer defektfreien Brennkraftmaschine bestimmt wird und daraus auf den Schadensort und/oder die Schadensgröße geschlossen wird. Dabei wird eine weitere Größe, nämlich die Phasenverschiebung des Zeitsignals, zur genauen Bestimmung des Schadensortes und der Schadensgröße herangezogen.

Eine vorteilhafte Vorrichtung zur Durchführung des erfindungsgemäßen Verfahrens ist dadurch gegeben, daß das elektrische Signal des im druckseitigen Ölkreislauf sitzenden Drucksensors gegebenenfalls nach seiner Verstärkung einem Vorfilter, insbesondere einem Tiefpaßfilter, zuführbar ist, dessen Ausgangssignal zusammen mit dem vom Winkelmarkengeber gewonnenen Taktsignal zur Erfassung der Dauer eines Arbeitsspieles, einem A/D-Wandler zuleitbar ist, dessen Ausgang gegebenenfalls unter Zwischenschaltung einer Einheit zur synchronen Signalmittelung mit einer Speichereinheit zur Abspeicherung des Zeitsignals und einer zur Drehzahl proportionalen Größe verbunden ist, und daß diese Speichereinheit einerseits mit einer Einheit für die Fouriertransformation des Zeitsignals in die Frequenzebene mit nachgeschalteter Pegelauswertung verbunden ist, sowie daß eine mit einer Klassifikationseinheit verbundene Vergleichseinrichtung, der vorgebbare Referenzwerte zuführbar sind, vorhanden ist und daß aundererseits die Speichereinheit mit einer Einheit zur Bestimmung der Lage der Extremwerte im Zeitsignal und der Klassifikationseinheit verbunden ist, die im Defektfall den Lagertyp und gegebenenfalls die Größe des Schadens, sowie über die Lage der Extremwerte die Nummer des dem schadhaften Lager zugeordneten Zylinders angibt. Diese Vorrichtung realisiert den Aufbau eines digital arbeitenden Diagnosesystems zur Aufzeigung des Schadenstyps und -ortes (Zylinder) bei Vorliegen eines Defektes an den drucköigeschmierten Gleitlagern des Kurbeltriebs. Nach allfälliger Verstärkung und Vorfilterung wird das Signal auf Basis von Kurbelwinkelmarken am Motor digitalisiert. Durch Signalmittelung erhält man einen repräsentativen Werteblock für einen Motorzyklus (720° Kurbelwinkel = 2 Umdrehungen beim Viertaktmotor). Die Taktgebung kann durch einen Triggerpuls, beispielsweise von der Nockenwelle oder von der Zündspannung, erfolgen. Dieser Werteblock wird rein softwaremäßig in der Zeitebene und in der Frequenzebene, mit zwischengeschalteter diskreter Fouriertransformation, weiterverarbeitet. Die Pegel in den defekttypischen Motorordnungen können so direkt ins Verhältnis zu der Grundschwingung gesetzt und mit entsprechenden Referenzwerten verglichen werden. Zusätzlich zur Klassifikation des Fehlers und Beurteilung der Schadensgröße kann sowohl aus dem Zeitsignal, aus der Lage des Minimums bzw. Maximums, als auch aus dem Frequenzspektrum, mittels der Phasenlage in den defekttypischen Ordnungen in Relation zur Grundschwingung, der Schadensort bzw. die Zylindernummer angegeben werden.

Zahlreiche am Markt befindliche Sensortypen sind geeignet, die Druckschwingungen aus dem Ölkreislauf aufzunehmen, wobei deren Anbringung meist sehr einfach erfolgen kann. Dadurch können aus dem zeitlichen Öldruckverlauf mit Kenntnis des physikalischen Bewegungsablaufes in der Brennkraftmaschine Zuordnungen der Anomalien zu einzelnen Bauteilen getroffen werden. Die Elektronik für die vollständige oder teilweise erfolgende Signalauswertung kann ebenso in ein handliches Gerät verpackt werden, so daß eine rasche Diagnose sowohl in der Serienfertigungskontrolle in der Industrie als auch im späteren Werkstattservice für einen bestimmten Motortyp möglich ist. Ebenso können über einen fest im Motorgehäuse eingebauten Sensor erfindungsgemäß vorverarbeitete Informationen direkt in ein vorhandenes Borddiagnosesystem z.B. bei Fahrzeugen der oberen Preisklasse, eingegliedert werden oder extra zu einer Langzeitbetriebsüberwachung von Fahrzeug- und Stationärmotoren dienen.

Durch eine der Auswertung vorausgehende Filterung ist auch eine Aufbereitung des elektrischen Signals möglich, die es erlaubt, z.B. den für Lagerschäden relevanten tiefen Frequenzbereich von den Pulsen der Ölpumpe, beispielsweise einer Zahnradpumpe - deren Hauptanregende meist zwischen 200 und 600 Hz liegt und sich frequenz- und amplitudenmässig deutlich von den tieffrequenten Signalen der Fehlerquellen unterscheidet - zu trennen. Es ist auch möglich, daß das Sensorelement Teil eines Schwingkreises ist, dessen Resonanzfrequenz sich entsprechend dem anliegenden Druck ändert. Dabei kann z.B. ein Piezoquarz zur Verwendung kommen, dessen Resonanzfrequenz deutlich, beispielsweise um das 10- bis 20-fache höher liegt, als die Frequenz der Öldruckschwingungen, die für die Schadendiagnose herangezogen werden. Im Sensor kann dabei der als Teil eines Schwingkreises seine Resonanzfrequenz entsprechend dem anliegenden Druck verändernde Piezoquarz zusammen mit seiner digitalen Halbleiterelektronik eine Einheit bilden.

Eine weitere günstige Anwendung der Erfindung sieht vor, daß der bzw. die Drucksensoren in der Ölzuleitung zu mindestens einem Hauptlager der Kurbelwelle und/oder in jener zu mindestens einem Pleuellager und/oder in der Ölzuleitung zu mindestens einem Lager der Nockenwelle und/oder in der Ölzuleitung zu mindestens einer Einrichtung für den hydraulischen Ventilspielausgleich einer Hubkolben-Brennkraftmaschine anbringbar ist bzw. sind. Dadurch ist es möglich, eine von Einflüssen anderer Lager weitgehend ungestörte Information über den Zustand der mit Drucköl versorgten Gleitlager, vornehmlich des Hauptlagers und des Pleuellagers an der Kurbelwelle zu gewinnen und mit früher gemessenen Solldaten der selben Brennkraftmaschine oder den Daten einer anderen Maschine der selben Baureihe zu vergleichen.

Gemäß einer Weiterbildung der Erfindung ist vorgesehen, daß der Drucksensor an einer leicht zugänglichen Stelle der Brennkraftmaschine, beispielsweise am Druckregelventil oder an Gewindeanschlüssen am Ölfilter angebracht ist.

Schließlich sieht eine weitere Ausgestaltung der Erfindung vor, daß der Drucksensor in einem mit dem Ölkreislauf der Brennkraftmaschine in Verbindung stehenden Schlauch angeordnet ist. Dadurch ist es möglich, die Erfassung der Meßdaten, beispielsweise in einer Meßstraße, auch außerhalb des Motors vorzunehmen, wenn dessen Ölkreislauf mit einem den Drucksensor aufnehmenden Schlauch in Verbindung steht. Bei Verwendung eines elastischen Schlauches ist zusätzlich dafür gesorgt, daß unerwünschte Motorschwingungen vom Drucksensor ferngehalten werden.

Die Erfindung wird im folgenden anhand von schematischen Darstellungen von Vorrichtungen zur Durchführung des Verfahrens sowie mit Hilfe von Diagrammen näher erläutert. Es zeigen

Figur 1 eine erfindungsgemäße Meßvorrichtung an einer Brennkraftmaschine,

Figur 2 eine weitere Meßvorrichtung an einer Hubkolben-Brennkraftmaschine,

Figur 3 das Schaltbild einer Meßvorrichtung, und die

Figuren 4 bis 8 zwei- bzw. dreidimensionale Darstellungen des Meßsignals.

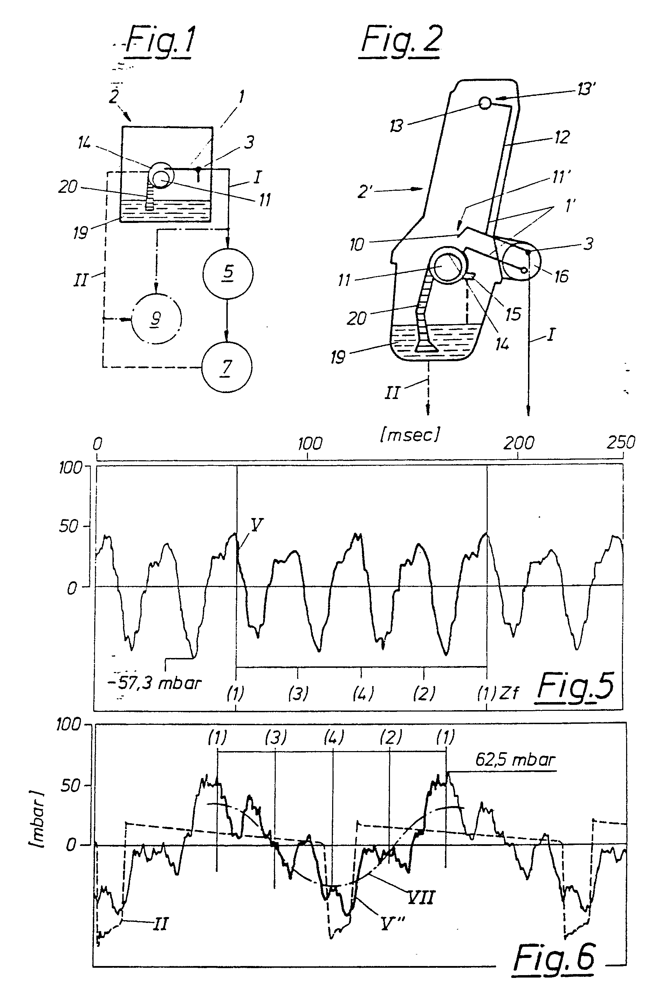

Die in Fig. 1 vereinfacht angedeutete Brennkraftmaschine 2 weist im druckseitigen Ölkreislauf 1 einen Drucksensor 3 auf, der die Druckschwingungen beim Betrieb der Brennkraftmaschine 2 aufnimmt und in ein elektrisches Signal I umwandelt. Das Meßsignal I wird einem Signalverstärker 5 zugeführt, dessen Ausgang mit einer Auswerteeinheit 7 verbunden ist. Die Druckumlaufschmierung erfolgt dabei in bekannter Weise durch eine von der Kurbelwelle 11 angetriebene Ölpumpe 14, deren Saugrohr 20 in den Ölsumpf 19 ragt. Ein der Drehzahl der Brennkraftmaschine 2 proportionales Signal II wird mittels Geber, beispielsweise an der Kurbelwelle 11, gewonnen und der Auswerteeinheit 7 zugeführt.

Bei der in Fig. 2 schematisch dargestellten Hubkolben-Brennkraftmaschine 2' sind Bauteile, die auch in Fig. 1 vorkommen, mit den gleichen Bezugszeichen versehen. Die Ölpumpe 14, die druckseitig ein Druckregelventil 15 aufweist, fördert das Öl in das Ölfilter 16, wo auslaßseitig im Ölkreislauf 1' der Drucksensor 3 angebracht ist. Das Schmieröl wird weiters über Druckleitungen 10 bzw. 12 dem Hauptlager 11' bzw. dem Lager 13' der Kurbelwelle 11 bzw. der Nockenwelle 13 zugeleitet. Die in bekannter Weise, z.B. durch einen Geber auf der Kurbelwelle 11 gewonnene Drehzahlinformation wird, ebenso wie das Meßsignal I der zuvor besprochenen Auswertung zugeführt.

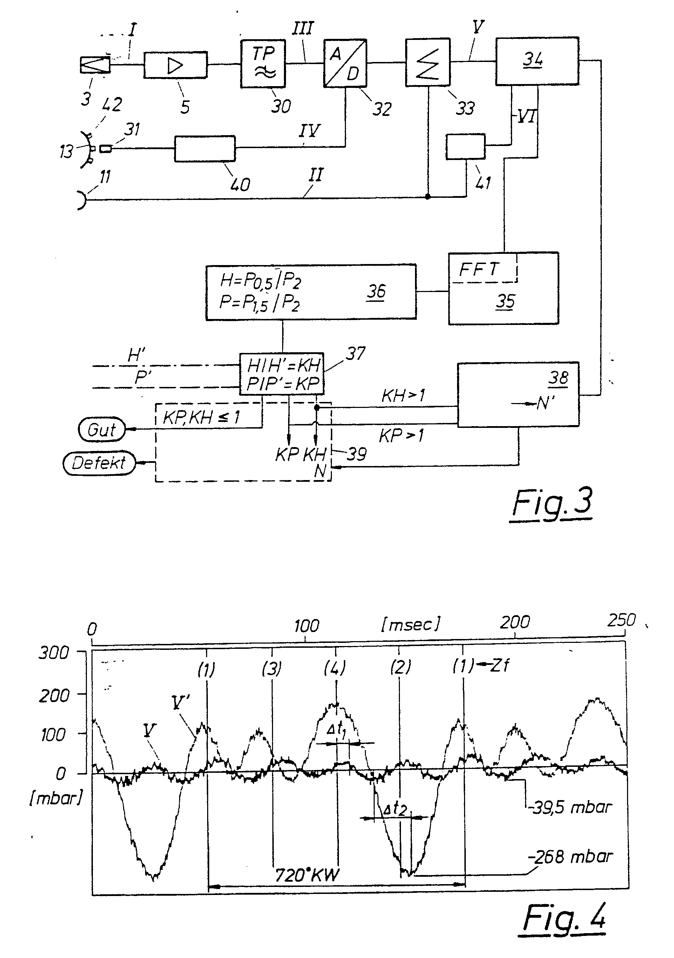

In Fig. 3 wird das vom Drucksensor 3 gewonnene Signal I nach dem Passieren des Verstärkers 5 einem Tiefpaßfilter 30 zugeleitet, dessen Ausgang mit dem Eingang eines A/D-Wandlers 32 verbunden ist, wo das Signal III auf der Basis von Kurbelwinkelmarken 42 der Kurbelwelle 13 digitalisiert wird. Vom Winkelmarkengeber 31 wird das durch die Pulsaufbereitung 40 gewonnene Signal IV dem A/D-Wandler 32 zugeleitet, der ausgangsseitig mit einer Einheit 33 zur synchronen Signalmittelung verbunden ist. Diese Einheit 33 erhält ihre Drehzahl- bzw. Drehwinkelinformation über ein Signal II eines Gebers an der Nockenwelle 11 (720° KW = 1 Motorzyklus). Das gemittelte Zeitsignal V kommt sur Speicherung in die Speichereinheit 34, wo nun ein gemittelter repräsentativer z.B. 256 Punkte umfassender Werteblock für einen Motorzyklus vorliegt.

Gleichzeitig wird auch ggf. über eine weitere Pulsaufbereitung 41 mit dem Ausgangssignal VI, das während der Messung aktuelle bzw. gemittelte Drehzahlsignal II, bzw. nach der Aufbereitung VI der Speichereinheit 34 zugeleitet und eine zur Drehzahl proportionale Größe dort abgelegt.

Zu der Speichereinheit 34 hat von nun an OFF-line zu einem beliebigen Zeitpunkt nach der ON-line erfolgenden Messung eine Einheit 35 Zugriff, wo der Werteblock nach einer Fouriertransformation (FFT) in der Frequenzebene vorliegt. Die letztgenannte Einheit 35 ist direkt mit der Pegelauswertung 36 verbunden. In der Pegelauswertung 36 werden mit Hilfe der Drehzahlinformation die Pegel in den defekttypischen Motorordnungen $P_{0,5, 1,5}$... direkt ins Verhältnis zum Pegel der Grundschwingung $P_2$ gesetzt und so die Bezugswerte 1 (Hauptlager) und P (Pleuellager) ermittelt. Die beiden Bezugswerte H bzw. P sind auch aus den noch zu besprechenden Fig. 7 bzw. 8 ersichtlich. Eine Vergleichseinrichtung 37 bildet aufgrund von vorgegebenen Referenzwerten H' (Hauptlager) und P' (Pleuellager) und den von der Pegelauswertung ermittelten Bezugswerten H und P Quotienten KH und KP. Ist der jeweilige Quotient kleiner/gleich eins, erfolgt eine Gut-Bewertung durch die Klassifikationseinheit 39, für KH bzw. KP größer eins wird der Lagertyp (Haupt- oder Pleuellager) und die Größe des Schadens angegeben. Eine Einheit 38, die ebenfalls Zugriff auf die Speichereinheit 34 hat, bestimmt in der Zeitebene die Lage N' der Extremwerte des Zeitsignals und gibt im Defektfall (KH bzw. KP>1) die Nummer N des dem schadhaften Lager zugeordneten Zylinders an die Klassifikationseinheit 39 weiter, wo das Ergebnis der Diagnose angegeben wird.

Neben der Lage, beispielsweise des Minimums des Drucksignals, ist es auch möglich, zum Beispiel bei Pleuellagerschäden, aus dem Zeitsignal V durch Ermittlung der Zeitverzögerungen $\Delta t_1$ bzw. $\Delta t_2$, welche zusammen ($\Delta t_1 + \Delta t_2$) die zeitliche Verschiebung des Minimums unter Berücksichtigung der Laufzeit und des zeitlichen Auftretens der Druckpulsmaxima relativ zum Zündereignis ($\Delta t_1$)-beschreiben, den Schadensort und die Schadensgröße festzustellen, wie in Fig. 4 dargestellt. In diesem Diagramm ist der Öldruck in mbar über die Zeit in msec aufgetragen, wobei die in stärkerer Strichführung hervorgehobene Kurve das Zeitsignal V einer Brennkraftmaschine im Gutzustand zeigt und das mit V' bezeichnete Signal aus einem Pleuellagerschaden durch ein Lagerspiel von 0,2 mm anstatt ca. 0,06 mm am Pleuel N = 4 resultiert. Deutlich sichtbar ist die markante Druckabsenkung im Schwingungsminimum von -39,5 mbar auf -268 mbar. Der Schadensort ist durch seine Zuordnung zur Zündfolge Zf = (1), (3), (4), (2), (1) über einen Motorzyklus (720° Kurbelwindel) gegeben.

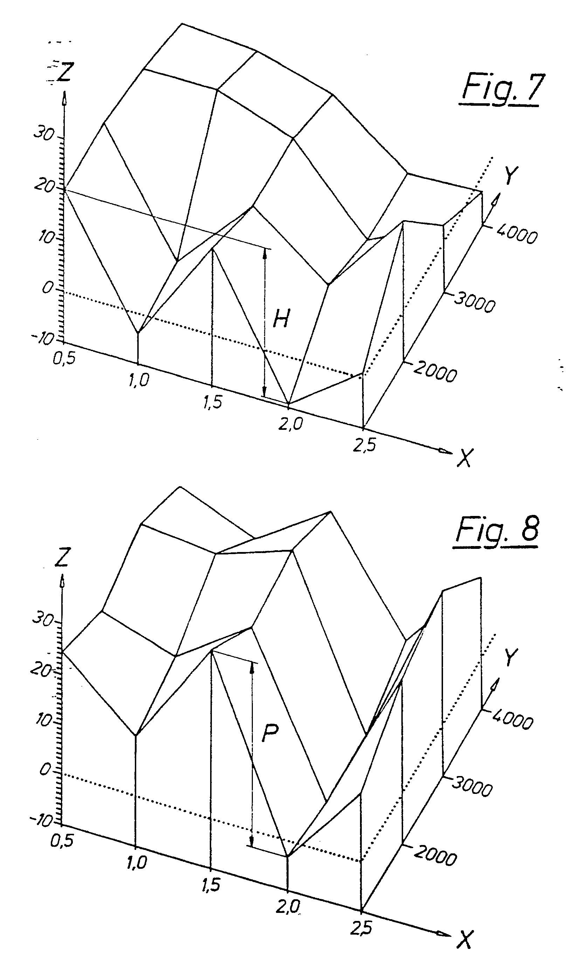

In den Fig. 5 und 6 ist der Einfluß eines Hauptlagerschadens auf das Meßsignal V dargestellt, wobei in beiden Diagrammen auf der Abszisse die Zeit in msec und auf der Ordinate der Öldruck in mbar aufgetragen ist. Fig. 5 zeigt das Meßsignal V einer Brennkraftmaschine im Gutzustand, bei 1000 Umdrehungen pro Minute, wobei ein Motorzyklus mit der Zündfolge Zf = (1), (3), (4), (2), (1) hervorgehoben ist und Fig. 6 die Auswirkung auf das Signal V bedingt durch einen Hauptlagerschaden (N = 1) durch ein Lagerspiel von 0,2 mm anstatt ca. 0,09 mm bei 1090 Umdrehungen pro Minute der Brennkraftmaschine. Es tritt eine Überlagerung der Grundschwingung durch eine Schwingung VII der halben Motorordnung auf, wodurch das dargestellte Meßsignal V" entsteht. Das Maximum (62,5mbar) des Meßsignals zeigt hier den Schadensort an.

Die Fig. 7 und 8 schließlich zeigen in dreidimensionalen Diagrammen die Drehzahlabhängigkeit der Signalpegelverschiebungen bei einem geschleppten Motor. Bei beiden Fig. ist auf der X-Achse die Motorordnung, auf der Y-Achse die Drehzahl in UpM und auf der Z-Achse die Druckpegeldifferenz in dB aufgetragen. Die im logarithmischen Maß aufgetragene Pegelverschiebung in den einzelnen drehzahlsynchronen Motorordnungen gegenüber einem "guten" Motor, dessen Bezugsniveau punktiert bei OdB eingetragen ist, resultieren in Fig. 7 aus einem Hauptlagerschaden (0,2 mm) und in Fig. 8 aus einem Pleuellagerschaden (0,2 mm). Dargestellt sind auch die Bezugswerte $H = P_{0,5}/P_2$ und $P = P_{1,5}/P_2$, die in der Meßeinrichtung nach Fig. 3 gewonnen und mit den Referenzwerten H', P' verglichen werden und so ein Maß für die Defekt-Beurteilung darstellen.

Die genannten Vorrichtungen zur Durchführung des erfindungsgemäßen Verfahrens können z.B. in einer Serienfertigungskontrolle dazu dienen, nach Ausscheidung von Schlechtmotoren die Nacharbeitszeit und Reparaturkosten zu senken. Alle Vorrichtungen sind prinzipiell sowohl in der Qualitätskontrolle der Massenproduktion, als auch im Werkstattservice, wobei einfachere Ausführungen ausreichen, einsetzbar. Die geprüften Motoren können dabei sowohl selbst- als auch fremdgetrieben sein, was sowohl durch den Anlassermotor, als auch durch eine geeignete Fremdantriebseinheit geschehen kann.

## Ansprüche

1. Meßverfahren zur Gewinnung von Daten über Lagerschäden einer selbst- oder fremdgetriebenen druckumlaufgeschmierten Brennkraftmaschine, wobei in Kombination
    a) im druckseitigen Ölkreislauf Druckschwingungen aufgenommen und in ein elektrisches Signal (I) umgewandelt werden, welches Signal als Funktion des Drehwinkels dargestellt wird,
    b) das elektrische Signal (I), ggf. nach dessen Verstärkung, einem Filter (30), insbesondere einem Tiefpaßfilter zugeführt wird,
    c) das gefilterte Signal (III) in einem A/D-Wandler (32) auf der Basis des Signals (IV) eines Winkelmarkengebers (31) digitalisiert und die gewonnenen digitalen Daten in einer Speichereinheit (34) abgelegt werden,
    d) die in der Zeitebene vorliegenden Daten in einer Transformationseinheit (35) in die Frequenzebene transformiert werden, wonach die transformierten Daten einer Pegelauswertung (36) zugeführt und mit vorgegebenen Referenzpegeln verglichen werden, wobei im Defektfall der Lagertyp und gegebenenfalls die Größe des Schadens angegeben wird, sowie
    e) für die in der Zeitebene vorliegenden Daten der Speichereinheit (34) die Lage der Extremwerte bestimmt wird, wonach im Defektfall aus der Lage der Extremwerte die Nummer des zugeordneten Zylinders angegeben wird.

2. Meßverfahren nach Anspruch 1, dadurch gekennzeichnet, daß die im A/D-Wandler digitalisierten Daten vor ihrer Abspeicherung einer Einheit zur drehzahlsynchronen Signalmittelung zugeführt werden, welcher Einheit ein Signal mit der Drehzahlinformation der Brennkraftmaschine zugeleitet wird.

3. Meßverfahren nach Anspruch 1 oder 2, dadurch gekennzeichnet, daß vorzugsweise zur Bestimmung eines Pleuellagerschadens, bei den in der Zeitebene vorliegenden Daten die Phasenverschiebung $\Delta t$ der Druckmaxima bzw- -minima im bezug auf das Zeitsignal einer defektfreien Brennkraftmaschine bestimmt wird, und daraus auf den Schadensort und/oder die Schadensgröße geschlossen wird.

4. Vorrichtung zur Durchführung des Verfahrens nach einem der Ansprüche 1 bis 3 mit einem Winkelmarkengeber, wobei ein Druckmesser ein den Druckschwingungen im druckseitigen Ölkreislauf entsprechendes elektrisches Signal erzeugt, dadurch gekennzeichnet, daß das elektrische Signal (I) des im druckseitigen Ölkreislauf sitzenden Drucksensors (3) gegebenenfalls nach seiner Verstärkung einem Vorfilter (30), insbesondere einem Tiefpaßfilter, zuführbar ist, dessen Ausgangssignal (III) zusammen mit dem vom Winkelmarkengeber (31) gewonnenen Taktsignal (IV) zur Erfassung der Dauer eines Arbeitsspieles, einem A/D-Wandler (32) zuleitbar ist, dessen Ausgang gegebenenfalls unter Zwischenschaltung einer Einheit (33) zur synchronen Signalmittelung mit einer Speichereinheit (34) zur Abspeicherung des Zeitsignals (V) und einer zur Drehzahl proportionalen Größe verbunden ist, und daß diese Speichereinheit (34) einerseits mit einer Einheit (35) für die Fouriertransformation des Zeitsignals in die Frequenzebene mit nachgeschalteter Pegelauswertung (36) verbunden ist, sowie daß eine mit einer Klassifikationseinheit (39) verbundene Vergleichseinrichtung (37), der vorgebbare Referenzwerte (H', P') zuführbar sind, vorhanden ist und daß andererseits die Speichereinheit (34) mit einer Einheit (38) zur Bestimmung der Lage (N') der Extremwerte im Zeitsignal und der Klassifikationseinheit (39) verbunden ist, die im Defektfall den Lagertyp und gegebenenfalls die Größe des Schadens, sowie über die Lage (N') der Extremwerte die Nummer (N) des dem schadhaften Lager zugeordneten Zylinders angibt.

5. Vorrichtung nach Anspruch 4, dadurch gekennzeichnet, daß der bzw. die Drucksensoren (3) in der Ölzuleitung (10) zu mindestens einem Hauptlager (11') der Kurbelwelle (11) und/oder in jener zu mindestens einem Pleuellager und/oder in der Ölzuleitung (12) zu mindestens einem Lager (13') der Nockenwelle (13) und/oder in der Ölzuleitung zu mindestens einer Einrichtung für den hydraulischen Ventilspielausgleich einer Hubkolben-Brennkraftmaschine (2') anbringbar ist bzw. sind.

6. Vorrichtung nach einem der Ansprüche 4 oder 5, dadurch gekennzeichnet, daß der Drucksensor (3) an einer leicht zugänglichen Stelle der Brennkraftmaschine, beispielsweise am Druckregelventil (15) oder an Gewindeanschlüssen am Ölfilter (16) angebracht ist.

7. Vorrichtung nach Anspruch 4, dadurch gekennzeichnet, daß der Drucksensor (3) in einem mit dem Ölkreislauf der Brennkraftmaschine in Verbindung stehenden Schlauch angeordnet ist.

## Claims

1. Measuring process for obtaining data concerning bearing faults in a self-driven or externally motored internal combustion engine with a pressurised lubrication circuit, in which in combination

   a) oscillations in pressure in the pressure side of the lubricant circuit are picked up and converted into an electrical signal (I) which is displayed as a function of the angle of rotation,

   b) the electrical signal (I), if necessary after amplification, is passed to a filter (30) in particular a low-pass filter,

   c) the filtered signal (III) is digitalised in an A/D converter (32) on the basis of the signal (IV) of an angle mark transmitter (31) and the resulting digital data is put into a memory unit (34),

   d) the data present in the time plane is transformed into the frequency plane in a transformation unit (35), whereupon the transformed data is fed to a level-evaluating device (36) and compared with predetermined reference levels, whereby in the event of a fault the type of bearing and if necessary the magnitude of the fault is given, and

   e) for the data from the memory unit (34) present in the time plane the position of the extreme values is determined, whereupon in the event of a fault the number of the relevant cylinder is derived from the position of the extreme value.

2. Measuring process according to claim 1 characterised in that the data digitalised in the A/D converter is, before being stored, fed to a unit for averaging the signal synchronously with the rotational speed, to which unit is fed a signal containing information on the speed of the engine.

3. Measuring process according to claim 1 or 2, characterised in that preferably for determining a big end bearing fault in which the data present in the time plane on the phase displacement Δt of the pressure maxima and minima is determined in relation to the time signal of a fault-free engine, and from this a conclusion is derived on the position of the fault and/or the magnitude of the fault.

4. Means for carrying out the process according to one of claims 1 to 3 with an angle mark transmitter, in which a pressure transducer produces an electrical signal corresponding to the oscillations in pressure in the pressure side of the lubricant circuit, characterised in that the electrical signal (I) of the pressure sensor (3) placed in the pressure side of the lubricant circuit, if necessary after amplification, is fed to a pre-filter (30), in particular a low-pass filter, of which the output signal (III) is fed together with the clock signal (IV) obtained from the angle mark transmitter (31) for determining the duration of the working cycle, to an A/D converter (32) of which the output, if necessary with the interposition of a unit (33) for synchronous averaging of the signal, is connected to a memory unit (34) for storing the time signal (V) and a magnitude proportional to the speed of rotation, and that this memory unit (34) is connected on the one hand to a unit (35) for the Fourier transformation of the time signal into the frequency plane with a following level evaluation (36), and that a comparator unit (37) is present connected to a classification unit (39), to which the predetermined reference values (H', P') are fed, and that on the other hand the memory unit (34) is connected to a unit (38) for determining the position (N') of the extreme value in the time signal and the classification unit (39) which in the event of a fault reveals the type of bearing and if necessary the magnitude of the damage as well as through the position (N') of the extreme value the number (N) of the cylinder associated with the faulty bearing.

5. Means according to claim 4 characterised in that the pressure sensor or sensors (3) is or are provided in the oil supply (10) to at least one main bearing (11') of the crankshaft (11) and/or in that to at least one big end bearing and/or in the oil supply (12) to at least one bearing (13') of the camshaft (13) and/or in the oil supply to at least one device for hydraulic valve tappet clearance of a reciprocating internal combustion engine (2').

6. Means according to one of claims 4 or 5 characterised in that the pressure sensor (3) is mounted at an easily accessible point on the engine, for example, on the pressure regulating valve (15) or on screw-threaded connections on the oil filter (16).

7. Means according to claim 4 characterised in that the pressure sensor (3) is arranged in a hose connected to the lubricant circuit of the engine.

## Revendications

1. Procédé de mesure pour obtenir des données sur les endommagements de paliers d'un moteur à combustion interne a auto-allumage ou allumage séparé, lubrifié par circulation forcée d'huile, procédé comportant en combinaison les opérations suivantes:

   a) les fluctuations de la pression sont captées dans la circulation d'huile, côté refoulement, et sont converties en un signal électrique (I), lequel est représenté en tant que fonction de l'angle de rotation,

   b) le signal électrique (I), éventuellement après son amplification, est amené a un filtre (30), notamment un filtre passe-bas,

   c) le signal filtré (III) est mis sous forme numérique dans un convertisseur analogique/numérique (32) sur la base du signal (IV) d'un émetteur de marque d'angle (31), et les données numériques ainsi obtenues sont déposées dans une unité de mémorisation (34),

   d) les données présentes dans le plan temps sont transformées dans le plan fréquences dans une unité de transformation (35), après quoi les données transformées sont amenées à une exploitation de niveau (36) et sont comparées avec des niveaux de références prédéfinis, et en cas de défauts, le type de palier et, éventuellement, l'importance de l'endommagement sont indiqués,

   e) pour les données de l'unité de mémorisation (34) présentes dans le plan temps, la position des valeurs extrêmes est déterminée, après quoi, en cas de défaut, le numéro du cylindre associé est indiqué à partir de cette position des valeurs extrêmes.

2. Procédé de mesure selon la revendication 1, caractérisé en ce que les données mises sous forme numérique dans le convertisseur analogique/numérique, sont amenées avant leur mémorisation à une unité permettant un établissement de la moyenne des signaux en synchronisme avec la vitesse de rotation, unité à laquelle est appliqué un signal avec l'information de vitesse de rotation du moteur à combustion interne.

3. Procédé de mesure selon la revendication 1 ou la revendication 2, caractérisé en ce que, de préférence pour déterminer un endommagement de paliers de têtes de bielles, avec les données présentes dans le plan de temps, le décalage de phases Δt des maxima de pression ou des minima de pression, est déterminé en se référant au signal de temps d'un moteur à combustion interne exempt de défauts, et à partir de là, des conclusions sont tirées en ce qui concerne l'endroit de l'endommagement et/ou l'importance de l'endommagement.

4. Dispositif pour la mise en oeuvre du procédé selon une des revendications 1 à 3, avec un émetteur de marque d'angle, tandis qu'un moyen de mesure de la pression produit un signal électrique correspondant aux fluctuations de pression dans la circulation d'huile, côté refoulement, dispositif caractérisé en ce que le signal électrique (I) du détecteur de pression (3) placé dans la circulation d'huile, côté refoulement, est susceptible d'être amené, après son amplification éventuelle, à un pré-filtre (30), notamment un filtre passe-bas, dont le signal de sortie (III) est susceptible d'être amené, conjointement avec le signal de synchronisation (IV) obtenu à partir de l'émetteur de marque d'angle (31), pour détecter la durée d'un cycle de fonctionnement, à un convertisseur analogique/numérique (32) dont la sortie est reliée, éventuellement avec interposition d'une unité (33) permettant la formation en synchronisme de la moyenne du signal, à une unité de mémorisation (34) pour mémoriser le signal de temps (V) et une grandeur proportionnelle à la vitesse de rotation, et en ce que cette unité de mémorisation (34) est reliée, d'un côté, à une unité (35) pour la transformation de Fourier du signal de temps dans le plan de fréquences avec une exploitation du niveau (36) branché à la suite, et en ce qu'il est prévu un moyen de comparaison (37) relié à une unité de classification (39) et auquel sont susceptibles d'êtres amenées des valeurs de référence (H', P') susceptibles d'être prédéfinies, et en ce que d'un autre côté, l'unité de mémorisation (34) est reliée à une unité (38) pour la détermination de la position (N') des valeurs extrêmes dans le signal de temps et dans l'unité de classification (39), qui en cas de défaut, indique le type de palier et éventuellement, l'importance de l'endommagement, ainsi que par l'intermédiaire de la position (N') des valeurs extrêmes, le numéro (N) du cylindre associé au palier endommagé.

5. Dispositif selon la revendication 4, caractérisé en ce que le détecteur de pression (3) est susceptible d'être installé, ou en ce que les détecteurs de pression (3) sont susceptibles d'être installés, sur la canalisation d'alimentation en huile (10) allant au moins à un palier principal (11') de l'arbre de vilebrequin (11), et/ou sur la canalisation d'alimentation en huile allant au moins à un palier de tête de bielle, et/ou sur la canalisation d'alimentation en huile (12) allant au moins à un palier (13') de l'arbre à came (13), et/ou sur la canalisation d'alimentation en huile allant au moins à une installation pour la compensation hydraulique du jeu des soupapes d'un moteur à combustion interne à pistons alternatifs (2').

6. Dispositif selon une des revendications 4 ou 5, caractérisé en ce que le détecteur de pression (3) est installé à un emplacement facilement accessible du moteur à combustion interne, par exemple sur la soupape de réglage de la pression (15) ou bien sur les raccords filetés au filtre d'huile (16).

7. Dispositif selon la revendication 4, caractérisé en ce que le détecteur de pression (3) est disposé sur un tuyau souple qui est en communication avec la circulation d'huile du moteur à combustion interne.

_Fig.1_

_Fig.2_

_Fig.5_

_Fig.6_

_Fig.3_

_Fig.4_

Fig.7

Fig. 8